# EUROPEAN PATENT APPLICATION

(11) **EP 4 620 659 A1**
(43) Date of publication of application: **24.09.2025**
(21) Application number: 23912246.8
(22) Date of filing: 27.12.2023
(51) Int. Cl.: B29C 70/42

(54) **METHOD FOR FORMING COMPOSITE MATERIAL COMPONENT**

(30) Priority: 27.12.2022 US 202263435363 P
(71) Applicant: Kawasaki Jukogyo Kabushiki Kaisha, Kobe-shi, Hyogo 650-8670 (JP)
(72) Inventor: OGASAWARA, Shodo, Kobe-shi, Hyogo 650-8670 (JP); AKAHORI, Mitsuru, Kobe-shi, Hyogo 650-8670 (JP); SUZUKI, Hiroharu, Kobe-shi, Hyogo 650-8670 (JP); KIMOTO, Jyunichi, Kobe-shi, Hyogo 650-8670 (JP); SAKAI, Akihito, Kobe-shi, Hyogo 650-8670 (JP)
(74) Representative: Leinweber & Zimmermann
(86) International application number: PCT/JP2023/046923
(87) International publication number: WO 2024/143468

(57) **Abstract**

A method for molding a composite material component includes: laminating a prepreg onto each of an upper mold and a lower mold; placing a compression member of a predetermined shape on a surface of at least one laminated body of an upper mold laminated body laminated onto the upper mold and a lower mold laminated body laminated onto the lower mold, and applying heating and pressurization; removing the compression member from the laminated body on which the compression member is placed; combining the upper mold and the lower mold to cause the surface of the upper mold laminated body to come into contact with the surface of the lower mold laminated body, and forming a single molding laminated body from the upper mold laminated body and the lower mold laminated body; and applying heating and pressurization to the molding laminated body to mold the composite material component.

## Description

### Technical Field

The present disclosure relates to a method for molding a composite material component.

### Background Art

Patent Literature 1 discloses a method for manufacturing a table for a machine tool as a composite material component including fiber-reinforced plastics, which is a composite material. In this manufacturing method, sheet-like fibers are laminated onto each of an upper mold and a lower mold while being impregnated with a thermosetting resin, and the upper mold and the lower mold are combined and then heated, thereby molding the composite material component.

When molding a composite material component that varies in thickness at certain locations of the component and has a curved contour on the surface of the component, deformation, fiber distortion, and internal defects such as cracks or voids inside the component may occur.

### Citation List

### Patent Literature

Patent Literature 1: JP 2002-254526 A

### Summary of Invention

An object of the present disclosure is to provide a method for molding a composite material component that allows the occurrence of deformation, fiber distortion, and internal defects to be suppressed.

A method for molding a composite material component according to one aspect of the present disclosure includes: laminating a prepreg onto each of an upper mold and a lower mold; placing a compression member of a predetermined shape on a surface of at least one laminated body of an upper mold laminated body laminated onto the upper mold and a lower mold laminated body laminated onto the lower mold, and applying heating and pressurization to the laminated body on which the compression member is placed; removing the compression member from the laminated body on which the compression member is placed; combining the upper mold and the lower mold to cause the surface of the upper mold laminated body to come into contact with the surface of the lower mold laminated body, and forming a single molding laminated body from the upper mold laminated body and the lower mold laminated body; and applying heating and pressurization to the molding laminated body to mold the composite material component.

### Brief Description of Drawings

FIG. 1 is a flowchart of a method for molding a composite material component according to a first embodiment.
FIG. 2A is a diagram showing a step of laminating a prepreg onto an upper mold and a lower mold in the molding method according to the first embodiment.
FIG. 2B is a diagram showing a step of compressing a laminated body in the molding method according to the first embodiment.
FIG. 2C is a diagram showing a step of removing a compression member in the molding method according to the first embodiment.
FIG. 2D is a diagram showing a step of combining the upper mold and the lower mold in the molding method according to the first embodiment.
FIG. 2E is a diagram showing a step of molding the composite material component in the molding method according to the first embodiment.
FIG. 3A is a diagram showing a step of processing a partial lamination material in a molding method according to a second embodiment.
FIG. 3B is a diagram showing a modification of the step of processing the partial lamination material in the molding method according to the second embodiment.
FIG. 3C is a diagram showing a step of laminating a prepreg onto an upper mold and a lower mold in the molding method according to the second embodiment.
FIG. 4A is a diagram showing a step of laminating a prepreg onto an upper mold in a molding method according to a third embodiment.
FIG. 4B is a diagram showing a step of laminating a prepreg onto a lower mold in the molding method according to the third embodiment.
FIG. 5A is a diagram showing a step of laminating a prepreg onto an upper mold and a lower mold in a molding method according to a fourth embodiment.
FIG. 5B is a diagram showing a step of combining the upper mold and the lower mold in the molding method according to the fourth embodiment.
FIG. 5C is a diagram showing a step of molding a composite material component in the molding method according to the fourth embodiment.
FIG. 5D is a diagram showing a step of trimming an end of the composite material component in the molding method according to the fourth embodiment.
FIG. 6A is a diagram showing a step of laminating a prepreg onto an upper mold in a molding method according to a fifth embodiment.
FIG. 6B is a diagram showing a step of laminating a prepreg onto a lower mold in the molding method according to the fifth embodiment.
FIG. 7A is a diagram showing a step of laminating a prepreg onto an upper mold and a lower mold in a molding method according to a modified embodiment.
FIG. 7B is a diagram showing a step of combining the upper mold and the lower mold in the molding method according to the modified embodiment.
FIG. 7C is a diagram showing a step of molding a composite material component in the molding method according to the modified embodiment.

### Description of Embodiments

The molding method according to the present disclosure is a method for molding a composite material component by heating and pressurizing a laminated body of a prepreg. As the molding method, the press molding method, the autoclave molding method, and the like can be adopted. The composite material component is a component including fiber-reinforced plastics, which is a composite material including fibers and resin. Examples the fibers include glass fibers and carbon fibers. The composite material component may be applied to, for example, components for aircraft, and components for wind turbines for wind power generation, ships, tanks, or automobiles. The prepreg is a sheet body with a thermosetting resin or a thermoplastic resin impregnated in a fiber substrate.

The method for molding a composite material component according to the present disclosure is particularly effective as a method for molding a composite material component that varies in thickness at certain locations of the component and has a curved contour on the surface of the component. That is, the method for molding a composite material component according to the present disclosure is a molding method suitable when the thickness variation of the composite material component is large. In the case where the thickness variation is large, for example, at least one of the following conditions is satisfied: the first condition, the second condition, and the third condition. The first condition is a condition that indicates that the difference between two points on the component surface in the thickness direction is 10 mm or more. The second condition is a condition that indicates that the difference in the number of prepreg laminations between two points on the component surface is 50 layers or more. The third condition is a condition that indicates that when the difference between two points on the component surface in the thickness direction is set to 1, the difference between the two points in the direction perpendicular to the thickness direction is 6 or less.

Embodiments of a method for molding a composite material component according to the present disclosure will be described below with reference to the drawings.

### [First Embodiment]

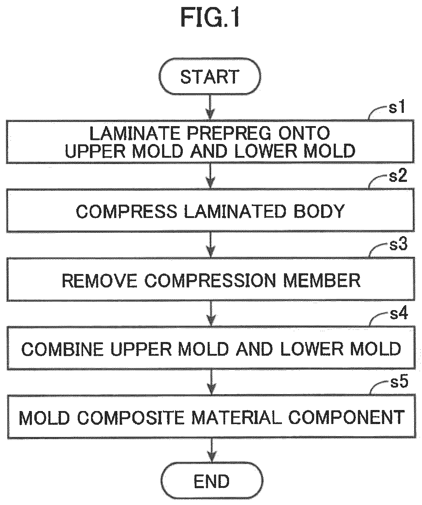

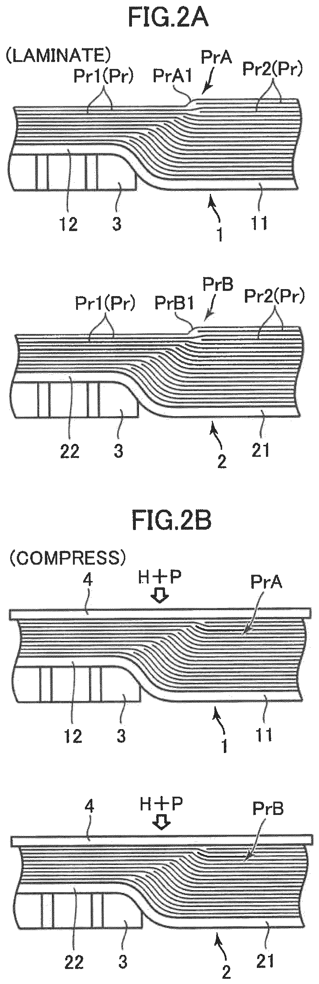

FIG. 1 is a flowchart of a method for molding a composite material component according to a first embodiment. FIGS. 2A to 2E are diagrams showing respective steps in the molding method according to the first embodiment. The composite material component PA is molded using a molding tool. Therefore, when molding the composite material component PA, the molding tool is prepared. As the molding tool, an upper mold 1 and a lower mold 2, which each have a cavity conforming to the outer shape of the composite material component PA, are prepared. When molding the composite material component PA that has a contour on each surface on both sides in the thickness direction of the component, the upper mold 1 has a cavity with a depth variation that is equal to or greater than a predetermined value and includes a deep portion 11 and a shallow portion 12 of the cavity, and similarly, the lower mold 2 also has a cavity with a deep portion 21 and a shallow portion 22. For example, in the cavity of the upper mold 1, when the shallow portion of the cavity is a flat surface, a portion that has a gradient connected from the shallow portion and a deeper cavity than the shallow portion is the deep portion 11, while a flat surface with a cavity shallower than the deep portion is the shallow portion 12. Similarly, in the cavity of the lower mold 2, when the shallow portion of the cavity is a flat surface, a portion that has a gradient connected from the shallow portion and a deeper cavity than the shallow portion is the deep portion 21, while a flat surface with a cavity shallower than the deep portion is the shallow portion 22. When the shallow portion of the cavity is not a flat surface but has a gradient, based on the angle of the gradient, portions of the gradient that is equal to or less than a predetermined angle may be defined as the shallow portions 12 and 22, while portions connected from the shallow portions and have a gradient greater than a predetermined angle may be defined as the deep portions 11 and 21. In the cavity of the upper mold 1, based on the median depth of the cavity, a portion having a depth equal to or greater than the median depth may be defined as the deep portion 11, while a portion having a depth less than the median depth may be defined as the shallow portion 12. Similarly, in the cavity of the lower mold 2, based on the median depth of the cavity, a portion having a depth equal to or greater than the median depth may be defined as the deep portion 21, while a portion having a depth less than the median depth may be defined as the shallow portion 22. When molding the composite material component PA that has a contour on only one surface in the thickness direction of the component, the upper mold 1 is a mold having the deep portion 11 and the shallow portion 12 of the cavity, while the lower mold 2 is a mold in which the depth variation of the cavity is less than a predetermined value. Alternatively, the upper mold 1 may be a mold in which the depth variation of the cavity is less than a predetermined value, while the lower mold 2 may be a mold having the deep portion 21 and the shallow portion 22 of the cavity. The mold in which the depth variation of the cavity is equal to or greater than a predetermined value is a mold that satisfies at least one of the above-mentioned first condition, second condition, and third condition. The mold in which the depth variation of the cavity is less than a predetermined value is a mold that satisfies none of the above-mentioned first condition, second condition, and third condition.

In the following description, the molding tool in which the depth variation of the cavity according to the thickness variation of the composite material component PA is equal to or greater than a predetermined value may be referred to as a type 1 molding tool, while the molding tool in which the depth variation of the cavity is less than a predetermined value may be referred to as a type 2 molding tool. In the example shown in FIG. 2A, the upper mold 1 is the type 1 molding tool that includes the deep portion 11 and the shallow portion 12 of the cavity. Similarly, the lower mold 2 is the type 1 molding tool that includes the deep portion 21 and the shallow portion 22 of the cavity. Note that when the thickness of the mold is constant in the upper mold 1 and the lower mold 2, a reinforcing member 3 including a rib is disposed to come into contact, from the outside, with the shallow portion 12 of the cavity of the upper mold 1 and the shallow portion 22 of the cavity of the lower mold 2.

In step s1, as shown in FIG. 2A, a prepreg Pr is laminated onto each of the upper mold 1 and the lower mold 2. As a result, an upper mold laminated body PrA, in which the prepreg Pr is laminated onto the upper mold 1, and a lower mold laminated body PrB, in which the prepreg Pr is laminated onto the lower mold 2, are created.

The prepreg Pr may take a form that includes a base lamination material Pr1 and a partial lamination material Pr2. The base lamination material Pr1 is a material that is laminated to correspond to the entire composite material component PA. That is, the base lamination material Pr1 is laminated across the cavity of each of the upper mold 1 and the lower mold 2. The partial lamination material Pr2 is a material shorter than the base lamination material Pr1. When molding the composite material component PA that varies in thickness and has a contour on its surface, the partial lamination material Pr2 is partially laminated corresponding to a thicker area in the composite material component PA. That is, the partial lamination material Pr2 is laminated onto the deep portion 11 of the cavity of the upper mold 1 and the deep portion 21 of the cavity of the lower mold 2. The partial lamination material Pr2 may be laminated to extend to a part of the shallow portion 12 of the cavity of the upper mold 1 or to a part of the shallow portion 22 of the cavity of the lower mold 2. The prepreg Pr may include another material that is shorter than the base lamination material Pr1 other than the base lamination material Pr1 and the partial lamination material Pr2.

In step s1 of laminating the prepreg Pr onto each of the upper mold 1 and lower mold 2, one or more base lamination materials Pr1 are laminated onto the molding tool of at least one of the upper mold 1 and lower mold 2, one or more partial lamination materials Pr2 are laminated, and the other base lamination material Pr1 is laminated onto the partial lamination material Pr2. That is, when laminating the prepreg Pr onto each of the upper mold 1 and the lower mold 2, in the molding tool of at least one of the upper mold 1 and the lower mold 2, the base lamination material Pr1 and the partial lamination material Pr2 are laminated alternately or in multiple layers. As a result, in the molding tool of at least one of the upper mold 1 and the lower mold 2, it is possible to partially laminate the partial lamination material Pr2 corresponding to a thicker area of the composite material component PA to be sandwiched between the plurality of base lamination materials Pr1.

When molding the composite material component PA that has a contour on each surface on both sides in the thickness direction, the base lamination material Pr1 and the partial lamination material Pr2 are laminated alternately or in multiple layers onto each of the upper mold 1 and the lower mold 2, which are the type 1 molding tools. When molding the composite material component PA that has a contour only on one surface in the thickness direction, in the upper mold 1 and lower mold 2, the base lamination material Pr1 and the partial lamination material Pr2 are laminated alternately or in multiple layers onto the type 1 molding tool, while only the base lamination material Pr1 is laminated onto the type 2 molding tool. Note that in step s1 of laminating the prepreg Pr onto each of the upper mold 1 and the lower mold 2, only the base lamination material Pr1 may be laminated without laminating the partial lamination material Pr2. In this way, by laminating the prepreg Pr onto each of the upper mold 1 and lower mold 2, the upper mold laminated body PrA and the lower mold laminated body PrB are created.

Next, in step s2, as shown in FIG. 2B, a compression member 4 of a predetermined shape is placed on the surface of at least one laminated body of the upper mold laminated body PrA and the lower mold laminated body PrB, and heating H and pressurization P are applied. As a result, the laminated body on which the compression member 4 is placed is compressed. When molding the composite material component PA that has a contour on each surface on both sides in the thickness direction, the compression member 4 is placed on the surface of each of the upper mold laminated body PrA and the lower mold laminated body PrB laminated onto the type 1 molding tool, and heating H and pressurization P are applied. When molding the composite material component PA that has a contour on only one surface in the thickness direction, the compression member 4 is placed on the surface of the laminated body laminated onto the type 1 molding tool among the upper mold laminated body PrA and the lower mold laminated body PrB, and heating H and pressurization P are applied. In the example shown in FIG. 2B, the compression member 4 is placed on the surface of each of the upper mold laminated body PrA and the lower mold laminated body PrB, and heating H and pressurization P are applied.

The compression member 4 is not particularly limited in shape, as long as the surface in contact with the surface of the laminated body is a flat surface with a predetermined allowable range of flatness. The compression member 4 can be implemented, for example, by using a planar plate. The compression member 4 does not have to be planar and may have thickness. The temperature and pressure when compressing the laminated body with the compression member 4 placed thereon are set to lower values than the temperature and pressure when molding the composite material component PA. For example, when molding the composite material component PA, the temperature is set to 190°C and the pressure to 0.7 MPa, whereas when compressing the laminated body, the temperature is set from 60°C to 90°C, and the pressure is set to be equal to or higher than 0.1 MPa and less than 0.7 MPa.

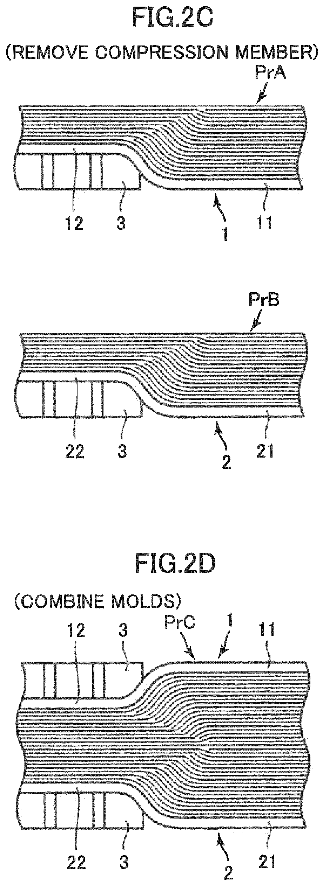

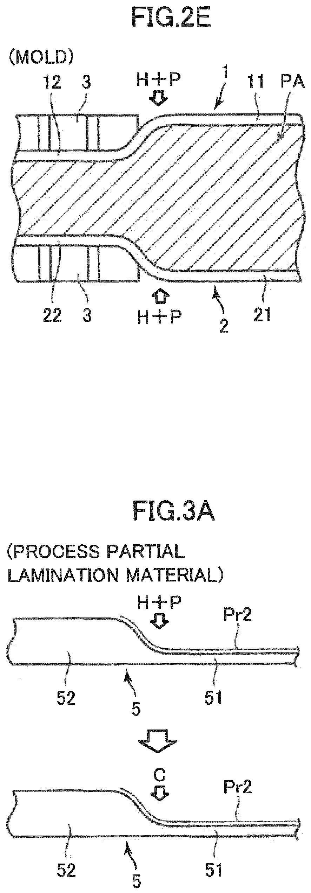

Next, in step s3, as shown in FIG. 2C, the compression member 4 is removed from the laminated body on which the compression member 4 is placed. Subsequently, in step s4, as shown in FIG. 2D, the upper mold 1 and the lower mold 2 are combined such that the surface of the upper mold laminated body PrA and the surface of the lower mold laminated body PrB come into contact, forming a single molding laminated body PrC from the upper mold laminated body PrA and the lower mold laminated body PrB. Then, in step s5, as shown in FIG. 2E, heating H and pressurization P are applied to the molding laminated body PrC to mold the composite material component PA.

The molding laminated body PrC, which is subjected to heating H and pressurization P when molding the composite material component PA, is formed by combining the upper mold laminated body PrA and the lower mold laminated body PrB obtained by laminating the prepreg Pr onto each of the upper mold 1 and the lower mold 2. As a result, when heating H and pressurization P are applied to the molding laminated body PrC, the resin is more likely to flow uniformly inside the cavity enclosed by the combined upper mold 1 and the lower mold 2 than when, for example, the prepreg Pr is laminated only onto the lower mold 2. This allows the occurrence of deformation, fiber distortion, and cracks inside the component to be suppressed in the composite material component PA.

When molding the composite material component PA that varies in thickness and has a contour on the surface, there may be a step present on the surface of the laminated body laminated in the type 1 molding tool among the upper mold laminated body PrA and the lower mold laminated body PrB. In the example shown in FIG. 2A, a step PrA1 is present on the surface of the upper mold laminated body PrA, which is laminated onto the upper mold 1 that is the type 1 molding tool, and a step PrB1 is present on the surface of the lower mold laminated body PrB, which is laminated onto the lower mold 2 that is the type 1 molding tool. In a state where such steps PrA1 and PrB1 are present, when the upper mold laminated body PrA and the lower mold laminated body PrB are combined to form a single molding laminated body PrC, a gap caused by the steps PrA1 and PrB1 is created inside the molding laminated body PrC. The gap inside the molding laminated body PrC causes internal defects such as cracks and voids inside the composite material component PA. Therefore, as described above, the compression member 4 is placed such that the flat surface of the compression member 4 comes into contact with the surface of the laminated body where a step is present among the upper mold laminated body PrA and the lower mold laminated body PrB, and heating H and pressurization P are applied to the laminated body. As a result, even if the step is present on the surface of the laminated body, the surface of the laminated body can be flattened along the flat surface of the compression member 4 by the compression of the compression member 4. This suppresses the occurrence of the gap inside the molding laminated body PrC, thereby suppressing the formation of internal defects such as cracks and voids inside the composite material component PA.

### [Second Embodiment]

FIGS. 3A to 3C are diagrams showing a method for molding a composite material component PA according to a second embodiment. The molding method according to the second embodiment is characterized in that a predetermined process is performed on a partial lamination material Pr2 before laminating the partial lamination material Pr2 onto at least one molding tool of an upper mold 1 and a lower mold 2. Other than this, the molding method according to the second embodiment is the same as the molding method according to the first embodiment. Therefore, in the molding method according to the second embodiment, the description of parts that are the same as in the molding method according to the first embodiment is omitted.

The partial lamination material Pr2 is laminated onto a deep portion 11 of a cavity of the upper mold 1 and a deep portion 21 of a cavity of the lower mold 2. Before laminating the partial lamination material Pr2 onto the upper mold 1 and the lower mold 2, a process is performed to shape the partial lamination material Pr2 into a predetermined shape. Specifically, as shown in FIG. 3A, the partial lamination material Pr2 is laminated onto a shaping mold 5, which is a mold for the partial lamination material, and heating H and pressurization P are applied. This allows the partial lamination material Pr2 to be shaped into a shape along the shaping mold 5.

The shaping mold 5 is a mold including a deep portion 51 and a shallow portion 52 of the cavity. The deep portion 51 of the cavity of the shaping mold 5 has a shape that matches the deep portion 11 of the cavity of the upper mold 1 and the deep portion 21 of the cavity of the lower mold 2. However, the shape of the shaping mold 5 is not particularly limited, and is required at least to have a desired shape that includes the deep portion 51 and the shallow portion 52 of the cavity. The partial lamination material Pr2 is subjected to heating H and pressurization P while being laminated onto the deep portion 51 of the cavity of the shaping mold 5. In this case, the partial lamination material Pr2 is shaped into the shape along the deep portion 11 of the cavity of the upper mold 1 and the deep portion 21 of the cavity of the lower mold 2. The temperature and pressure when shaping the partial lamination material Pr2 on the shaping mold 5 are set to values lower than the temperature and pressure when molding the composite material component PA. For example, when shaping the partial lamination material Pr2, the temperature is set from 60°C to 90°C, and the pressure is set to be equal to or greater than 0.1 MPa and less than 0.7 MPa. The method for pressurization when shaping the partial lamination material Pr2 on the shaping mold 5 is not particularly limited, and various methods can be adopted such as, for example, pressurization using a mold, pressurization using a roller, and pressurization using a bagging material and vacuum suction.

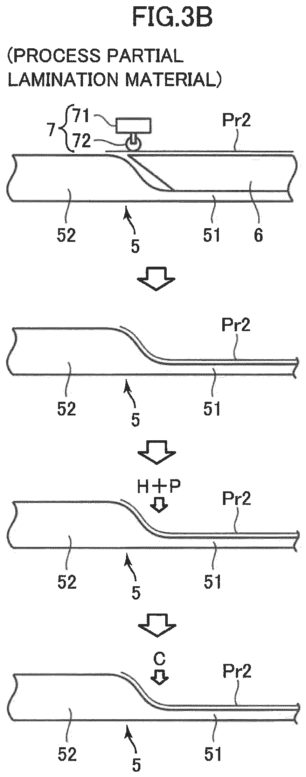

As shown in FIG. 3B, when laminating the partial lamination material Pr2 onto the shaping mold 5, an automatic laminating device 7 that can automatically laminate a prepreg Pr may be used. The automatic laminating device 7 includes a head 71 that supplies the prepreg Pr and a roller 72 that laminates the tape-shaped prepreg Pr supplied from the head 71 while pressing. When using the automatic laminating device 7 to laminate the partial lamination material Pr2 onto the shaping mold 5, a dummy plate 6 having an upper surface with a flat shape or a gently curved shape is installed on the deep portion 51 of the cavity of the shaping mold 5. In the dummy plate 6 installed in the deep portion 51 of the cavity of the shaping mold 5, the thickness of a portion adjacent to the shallow portion 52 of the cavity is set to a value approximately equal to the height from the deep portion 51 to the shallow portion 52 of the cavity in the shaping mold 5. As a result, in a state where the dummy plate 6 is installed in the deep portion 51 of the cavity of the shaping mold 5, it is possible to prevent a sudden change in the height position between the shallow portion 52 of the cavity and the upper surface of the dummy plate 6.

In a state where the dummy plate 6 is installed in the deep portion 51 of the cavity of the shaping mold 5, the partial lamination material Pr2 is laminated continuously from the shallow portion 52 of the cavity of the shaping mold 5 to the upper surface of the dummy plate 6. When laminating the partial lamination material Pr2 by using the automatic laminating device 7, the lamination may be performed in the order from the shaping mold 5 to the dummy plate 6, or in the order from the dummy plate 6 to the shaping mold 5. Next, the dummy plate 6 is removed. As a result, even with the shaping mold 5 having the deep portion 51 and the shallow portion 52 of the cavity, it is possible to automatically laminate the partial lamination material Pr2 onto the shaping mold 5 while preventing the head 71 of the automatic laminating device 7 from interfering with the shaping mold 5. After removing the dummy plate 6, heating H and pressurization P are applied to the partial lamination material Pr2 laminated onto the shaping mold 5 for shaping along the shaping mold 5. Even when using the automatic laminating device 7, when the head 71 of the automatic laminating device 7 does not interfere with the shaping mold 5, the partial lamination material Pr2 may be laminated onto the shaping mold 5 without installing the dummy plate 6.

As shown in FIGS. 3A and 3B, after applying heating H and pressurization P with the partial lamination material Pr2 laminated onto the shaping mold 5, rapid cooling C may be applied to the partial lamination material Pr2 on the shaping mold 5. This makes it easier to maintain the shaping state of the partial lamination material Pr2. The method for applying rapid cooling C to the partial lamination material Pr2 is not particularly limited, and for example, a method for blowing cooling air onto the partial lamination material Pr2 on the shaping mold 5, or the like can be adopted.

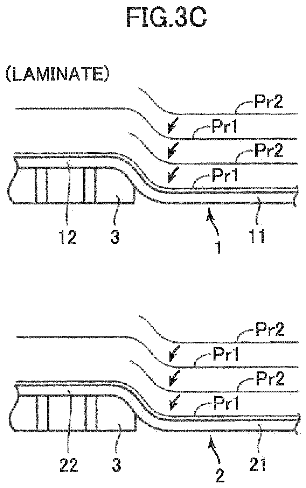

When shaping of the partial lamination material Pr2 on the shaping mold 5 is completed, as shown in FIG. 3C, a base lamination material Pr1 and the partial lamination material Pr2 are laminated alternately or in multiple layers onto at least one molding tool of the upper mold 1 and the lower mold 2. By laminating the previously shaped partial lamination material Pr2 onto the molding tool, it is possible to suppress the occurrence of a large step that comes from the partial lamination of the partial lamination material Pr2 on the surfaces of the upper mold laminated body PrA and the lower mold laminated body PrB. As a result, when compressing the surfaces of the upper mold laminated body PrA and the lower mold laminated body PrB with a compression member 4, it is possible to prevent locally excessive compressive force from acting, thereby suppressing the occurrence of fiber distortion.

### [Third Embodiment]

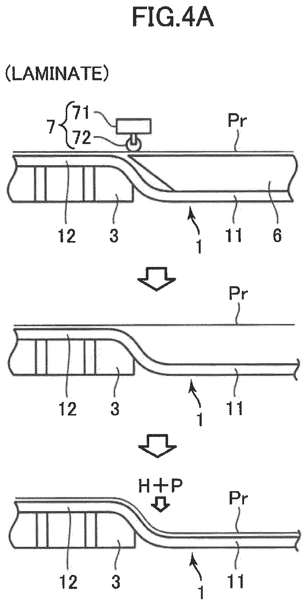

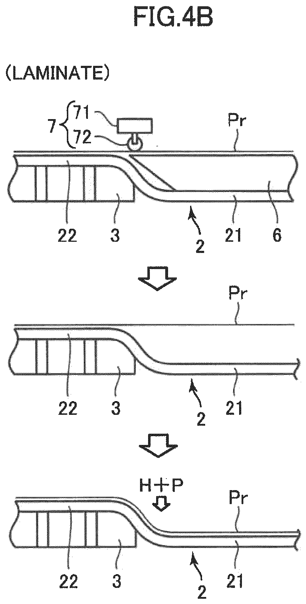

FIGS. 4A and 4B are diagrams showing a method for molding a composite material component PA according to a third embodiment. The molding method according to the third embodiment is characterized in that an automatic laminating device 7 is used when laminating a prepreg Pr onto each of an upper mold 1 and a lower mold 2. Other than this, the molding method according to the third embodiment is the same as the molding method according to the first and second embodiments. Therefore, in the molding method according to the third embodiment, the description of parts that are the same as in the molding method according to the first and second embodiments is omitted.

When molding the composite material component PA that varies in thickness and has a contour on the surface, a molding tool of at least one of the upper mold 1 and the lower mold 2 is a type 1 molding tool in which a depth variation of a cavity is equal to or greater than a predetermined value. In the examples shown in FIGS. 4A and 4B, each of the upper mold 1 and the lower mold 2 is the type 1 molding tool. When laminating the prepreg Pr onto each of the upper mold 1 and the lower mold 2 by using the automatic laminating device 7, a head 71 of the automatic laminating device 7 may interfere with the portions where the depth of the cavity in the upper mold 1 and the lower mold 2 changes, making it difficult to laminate the prepreg Pr.

Therefore, a dummy plate 6 having an upper surface with a flat shape or a gently curved shape is installed on a deep portion of the cavity of the type 1 molding tool of at least one of the upper mold 1 and the lower mold 2. In the dummy plate 6 installed in the deep portion of the cavity of the type 1 molding tool, the thickness of a portion adjacent to a shallow portion of the cavity is set to a value approximately equal to the height from the deep portion to the shallow portion of the cavity in the molding tool. As a result, in a state where the dummy plate 6 is installed in the deep portion of the cavity of the molding tool, it is possible to prevent a sudden change in the height position between the shallow portion of the cavity and the upper surface of the dummy plate 6. The material of the dummy plate 6 is not particularly limited, and may include, for example, metal, composite materials, or resin.

In the examples shown in FIGS. 4A and 4B, the dummy plate 6 is installed in a deep portion 11 of the cavity of the upper mold 1 and a deep portion 21 of the cavity of the lower mold 2. Then, the prepreg Pr is laminated continuously from a shallow portion 12 of the cavity of the upper mold 1 to the upper surface of the dummy plate 6. When laminating the prepreg Pr by using the automatic laminating device 7, the prepreg may be laminated in the order from the upper mold 1 to the dummy plate 6, or in the order from the dummy plate 6 to the upper mold 1. Subsequently, the dummy plate 6 is removed, and heating H and pressurization P are applied to the prepreg Pr laminated onto the upper mold 1 for shaping along the upper mold 1. Similarly, the prepreg Pr is laminated continuously from a shallow portion 22 of the cavity of the lower mold 2 to the upper surface of the dummy plate 6. When laminating the prepreg Pr by using the automatic laminating device 7, the prepreg may be laminated in the order from the lower mold 2 to the dummy plate 6, or in the order from the dummy plate 6 to the lower mold 2. Subsequently, the dummy plate 6 is removed, and heating H and pressurization P are applied to the prepreg Pr laminated onto the lower mold 2 for shaping along the lower mold 2.

The temperature and pressure when shaping the prepreg Pr on the molding tool of the upper mold 1 and the lower mold 2 are set to values lower than the temperature and pressure when molding the composite material component PA. For example, when shaping the prepreg Pr on the molding tool, the temperature is set from 60°C to 90°C, and the pressure is set to be equal to or greater than 0.1 MPa and less than 0.7 MPa. The method for pressurization when shaping the prepreg Pr on the molding tool of the upper mold 1 and the lower mold 2 is not particularly limited, and various methods can be adopted such as, for example, pressurization using a mold, pressurization using a roller, and pressurization using a bagging material and vacuum suction.

By using the dummy plate 6 as described above to laminate the prepreg Pr onto each of the upper mold 1 and the lower mold 2, it is possible to automatically laminate the prepreg Pr while preventing interference from the head 71 of the automatic laminating device 7, even for the type 1 molding tool that has both the deep portion and the shallow portion of the cavity.

Note that when the prepreg Pr takes a form including a base lamination material Pr1 and a partial lamination material Pr2, in the molding tools of the upper mold 1 and the lower mold 2, while using the dummy plate 6, the base lamination material Pr1 and the partial lamination material Pr2 are laminated alternately or in multiple layers. However, as shown in the molding method according to the second embodiment, when the partial lamination material Pr2 is shaped in advance on the shaping mold 5, the base lamination material Pr1 is laminated while using the dummy plate 6 in the molding tools of the upper mold 1 and the lower mold 2, and the partial lamination material Pr2 is laminated onto the base lamination material Pr1 without placing the dummy plate 6 on the base lamination material Pr1.

Even when using the automatic laminating device 7, when the head 71 of the automatic laminating device 7 does not interfere with the upper mold 1 or the lower mold 2, the base lamination material Pr1 may be laminated onto the upper mold 1 or the lower mold 2 without installing the dummy plate 6.

### [Fourth Embodiment]

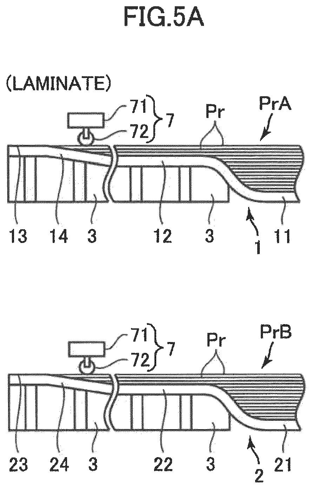

FIGS. 5A to 5D are diagrams showing a method for molding a composite material component PA according to a fourth embodiment. The molding method according to the fourth embodiment has characteristics regarding molding of an end of the composite material component PA. Other than this, the molding method according to the fourth embodiment is the same as the molding method according to the first to third embodiments. Therefore, in the molding method according to the fourth embodiment, the description of parts that are the same as in the molding method according to the first to third embodiments is omitted.

To prevent resin from flowing out from ends of an upper mold 1 and a lower mold 2 during heating H and pressurization P when molding the composite material component PA, it is preferable to provide a rise on top surfaces of the upper mold 1 and the lower mold 2, and to provide a contact surface where the upper mold 1 and the lower mold 2 come into contact with each other in the combined state. However, if the rise is provided on the top surfaces of the upper mold 1 and the lower mold 2, when using an automatic laminating device 7 to laminate a prepreg Pr onto each of the upper mold 1 and the lower mold 2, a head 71 or roller 72 of the automatic laminating device 7 may interfere, making it difficult to laminate the prepreg Pr.

Therefore, when laminating the prepreg Pr onto each of the upper mold 1 and the lower mold 2, a mold is prepared that has a gradient portion with a gradient toward the contact surface where the upper mold 1 and the lower mold 2 come into contact in the combined state, as the molding tool of at least one of the upper mold 1 and the lower mold 2. In the example shown in FIG. 5A, the upper mold 1 is a mold that includes a gradient portion 14 with a gradient toward a contact surface 13, while the lower mold 2 is a mold that includes a gradient portion 24 with a gradient toward a contact surface 23. In the upper mold 1 and the lower mold 2, the gradient portion 24 may be provided toward all of the contact surfaces 13 and 23, or the gradient portion 24 may be provided toward a part of the contact surface. In the upper mold 1 and the lower mold 2, the contact surfaces 13 and 23 include peripheral end surfaces of deep portions 11 and 21 of the cavity, and peripheral end surfaces of shallow portions 12 and 22 of the cavity. In the upper mold 1 and the lower mold 2, the contact surfaces 13 and 23 are the peripheral end surfaces of the cavity.

As shown in FIG. 5A, when laminating the prepreg Pr onto the upper mold 1, the prepreg Pr is laminated in such a way that the number of laminations decreases as approaching the contact surface 13. Similarly, when laminating the prepreg Pr onto the lower mold 2, the prepreg Pr is laminated in such a way that the number of laminations decreases as approaching the contact surface 23. Since the upper mold 1 has the gradient portion 14 and the lower mold 2 has the gradient portion 24, when using the automatic laminating device 7 to laminate the prepreg Pr onto each of the upper mold 1 and the lower mold 2, it is possible to automatically laminate the prepreg Pr while preventing the head 71 or roller 72 of the automatic laminating device 7 from interfering with the contact surfaces 13 and 23.

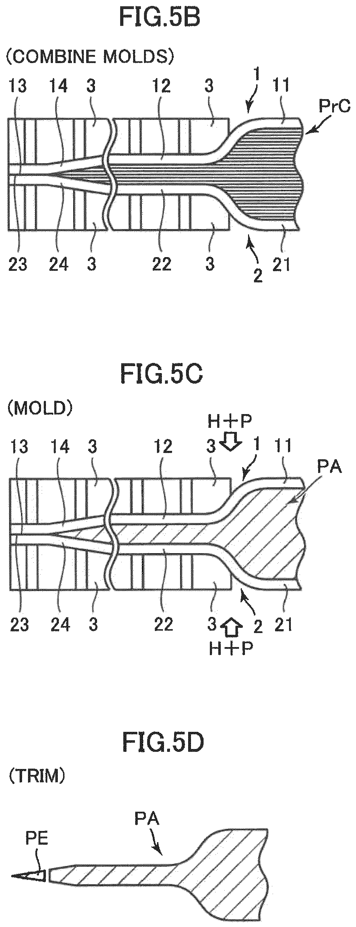

By laminating the prepreg Pr onto each of the upper mold 1 and lower mold 2, the upper mold laminated body PrA and the lower mold laminated body PrB are created. Subsequently, as shown in FIG. 5B, a molding laminated body PrC is created by combining the upper mold 1 and the lower mold 2. Then, as shown in FIG. 5C, heating H and pressurization P are applied to the molding laminated body PrC to mold the composite material component PA.

After applying heating H and pressurization P to the molding laminated body PrC, as shown in FIG. 5D, the combination of the upper mold 1 and the lower mold 2 is released, and an end PE of the composite material component PA, which is located in a predetermined range near the contact surfaces 13 and 23 of the gradient portions 14 and 24 in the combined state, is trimmed as an excess portion. This allows improvement of the quality of the composite material component PA. The predetermined range is not particularly limited, and for example, this is equal to or greater than 2.5 mm from the contact surfaces 13 and 23. The predetermined range may be, for example, from 2.5 mm or more to 100 mm or less from the contact surfaces 13 and 23.

### [Fifth Embodiment]

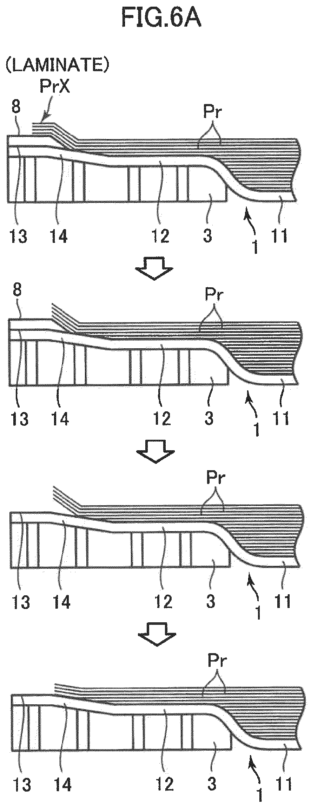

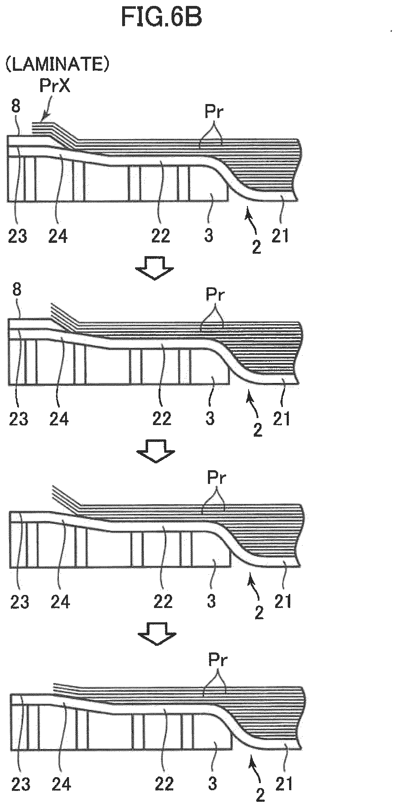

FIGS. 6A and 6B are diagrams showing a method for molding a composite material component PA according to a fifth embodiment. The molding method according to the fifth embodiment is characterized in that an excessive portion PrX in a prepreg Pr is cut when laminating the prepreg Pr onto each of an upper mold 1 and a lower mold 2. Other than this, the molding method according to the fifth embodiment is the same as the molding method according to the first to fourth embodiments. Therefore, in the molding method according to the fifth embodiment, the description of parts that are the same as in the molding method according to the first to fourth embodiments is omitted.

When a rise is provided on top surfaces of the upper mold 1 and the lower mold 2, or when a pin is provided for positioning the upper mold 1 and the lower mold 2, in a state where the prepreg Pr is laminated onto each of the upper mold 1 and the lower mold 2, the excessive portion PrX in the prepreg Pr may interfere with the rise or the pin. In a state where the prepreg Pr is laminated onto each of the upper mold 1 and the lower mold 2, the excessive portion PrX of the prepreg Pr may enter a contact surface between the upper mold 1 and the lower mold 2. In such cases, there may be a case where the upper mold 1 and the lower mold 2 cannot be properly combined.

Therefore, when laminating the prepreg Pr onto each of the upper mold 1 and the lower mold 2, a cutting plate 8 is disposed in an area on a molding tool of at least one of the upper mold 1 and the lower mold 2 where the excessive portion PrX of the prepreg Pr is at least laminated. In the examples shown in FIGS. 6A and 6B, the cutting plate 8 is disposed in each of the upper mold 1 and the lower mold 2. The cutting plate 8 is a plate to be used as a base when cutting the excessive portion PrX in the prepreg Pr. The shape of the cutting plate 8 is not particularly limited, and for example, one end has a shape with a gradient such as a taper, while the other end has a planar shape. The material of the cutting plate 8 is not particularly limited, and may be, for example, a composite material or resin.

In a state where the cutting plate 8 is disposed in the molding tools of the upper mold 1 and the lower mold 2, the prepreg Pr is laminated continuously from the molding tools to the cutting plate 8. Then, the excessive portion PrX of the prepreg Pr is cut on the cutting plate 8. This allows the excessive portion PrX in the prepreg Pr to be cut without damaging the molding tools of the upper mold 1 and the lower mold 2. When the excessive portion PrX in the prepreg Pr is cut, the cutting plate 8 is removed, and the laminated prepreg Pr is shaped along the molding tools of the upper mold 1 and the lower mold 2. By cutting the excessive portion PrX in the prepreg Pr, it is possible to prevent the excessive portion PrX from being present on contact surfaces 13 and 23 of the upper mold 1 and the lower mold 2. This allows the upper mold 1 and the lower mold 2 to be properly combined.

When shaping the prepreg Pr on the upper mold 1 or the lower mold 2, pressurization may be applied to the prepreg Pr. The method for pressurization is not particularly limited, and various methods can be adopted such as, for example, pressurization using a mold, pressurization using a roller, and pressurization using a bagging material and vacuum suction. The pressure when shaping the prepreg Pr on the upper mold 1 or the lower mold 2 is set to a value lower than the pressure when molding the composite material component PA. For example, when applying pressurization to the prepreg Pr for shaping, the pressure is set to 0.1 MPa or more and less than 0.7 MPa.

When shaping the prepreg Pr on the upper mold 1 or the lower mold 2, pressurization may be applied while heating is applied. The temperature when shaping the prepreg Pr on the upper mold 1 or the lower mold 2 is set to a value lower than the temperature when molding the composite material component PA. For example, when shaping the prepreg Pr while applying heating, the temperature is set to be equal to or lower than 90°C.

### [Other Embodiments]

The embodiments of the present disclosure have been described above, but the present disclosure is not limited to the above embodiments. For example, the following modified embodiments may be adopted.

In the molding method according to the third to fifth embodiments, some steps in the molding method according to the first and second embodiments may be omitted. That is, in the molding method according to the third to fifth embodiments, the step of compressing the upper mold laminated body PrA or the lower mold laminated body PrB by using the compression member 4 may be omitted. In the molding method according to the third to fifth embodiments, the step of shaping the partial lamination material Pr2 along the shaping mold 5 may be omitted.

In the molding method according to the third to fifth embodiments, a single molding tool may be used to mold the composite material component PA. In this case, in the third embodiment, the dummy plate 6 is used to laminate the prepreg Pr onto the molding tool, and heating H and pressurization P are applied to the laminated body of the prepreg Pr to mold the composite material component PA. In the fourth embodiment, the molding tool is prepared that has a gradient portion with a gradient toward the peripheral end surface of the cavity, and the prepreg Pr is laminated onto the molding tool such that the number of laminations decreases as approaching the peripheral end surface. Then, by applying heating H and pressurization P to the laminated body of the prepreg Pr, the composite material component PA is molded. Furthermore, after applying heating H and pressurization P to the laminated body of the prepreg Pr, the end of the composite material component PA located in a predetermined range near the peripheral end surface of the gradient portion on the molding tool is trimmed. In the fifth embodiment, the prepreg Pr is laminated in a state where the cutting plate 8 is disposed in the molding tool, and the excessive portion PrX in the prepreg Pr is cut on the cutting plate 8. Then, after removing the cutting plate 8, the laminated prepreg Pr is shaped along the molding tool, and heating H and pressurization P are applied to the laminated body of the prepreg Pr to mold the composite material component PA.

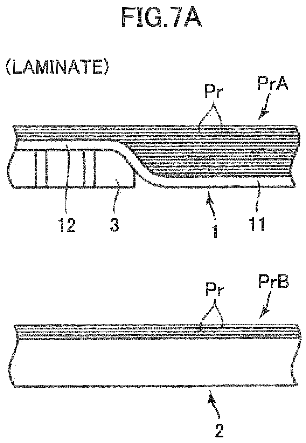

The above embodiments have described the method for molding the composite material component PA including a contour on each surface on both sides in the thickness direction, but are not limited to such a molding method. The method for molding the composite material component PA that has a contour on only one surface in the thickness direction will be described with reference to FIGS. 7A to 7C.

When molding the composite material component PA that has a contour only on one surface in the thickness direction, one of the upper mold 1 and the lower mold 2 is the type 1 molding tool, while the other is the type 2 molding tool. In the example shown in FIG. 7A, the upper mold 1 is the type 1 molding tool that includes the deep portion 11 and the shallow portion 12 of the cavity, while the lower mold 2 is the type 2 molding tool.

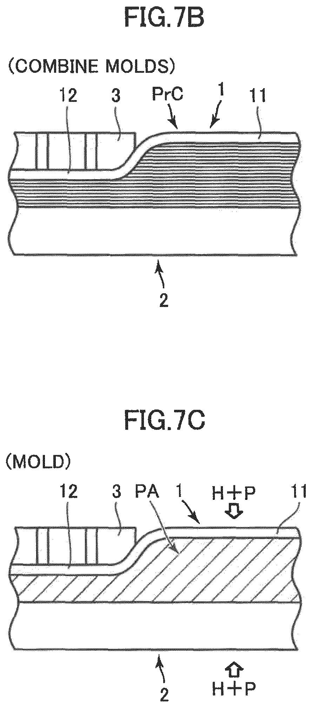

As shown in FIG. 7A, by laminating the prepreg Pr onto each of the upper mold 1 and lower mold 2, the upper mold laminated body PrA and the lower mold laminated body PrB are created. Subsequently, as in the first embodiment, when the step is present in the upper mold laminated body PrA, the compression member 4 is placed on the surface of the upper mold laminated body PrA, and heating H and pressurization P is applied to the upper mold laminated body PrA. Subsequently, as shown in FIG. 7B, the molding laminated body PrC is created by combining the upper mold 1 and the lower mold 2. Then, as shown in FIG. 7C, heating H and pressurization P are applied to the molding laminated body PrC to mold the composite material component PA.

By changing the material of the prepreg Pr laminated onto the upper mold 1 and the material of the prepreg Pr laminated onto the lower mold 2, the composite material component PA with different characteristics in the thickness direction can be molded.

### [Conclusion of Present Disclosure]

The specific embodiments described above include the disclosure having the following configurations.

A method for molding a composite material component according to a first aspect of the present disclosure includes: laminating a prepreg onto each of an upper mold and a lower mold; placing a compression member of a predetermined shape on a surface of at least one laminated body of an upper mold laminated body laminated onto the upper mold and a lower mold laminated body laminated onto the lower mold, and applying heating and pressurization to the laminated body on which the compression member is placed; removing the compression member from the laminated body on which the compression member is placed; combining the upper mold and the lower mold to cause the surface of the upper mold laminated body to come into contact with the surface of the lower mold laminated body, and forming a single molding laminated body from the upper mold laminated body and the lower mold laminated body; and applying heating and pressurization to the molding laminated body to mold the composite material component.

According to the first aspect, the molding laminated body, which is subjected to heating and pressurization when molding the composite material component, is formed by combining the upper mold laminated body and the lower mold laminated body obtained by laminating the prepreg onto each of the upper mold and the lower mold. As a result, when heating and pressurization are applied to the molding laminated body, the resin is more likely to flow uniformly inside the cavity enclosed by the combined upper mold and the lower mold than when, for example, the prepreg is laminated only onto the lower mold. Therefore, the occurrence of deformation, fiber distortion, and cracks inside the component can be suppressed in the composite material component.

When molding the composite material component that varies in thickness at certain locations of the component and has a curved contour on the surface of the component, there may be a step present on the surface of at least one laminated body of the upper mold laminated body and the lower mold laminated body. In a state where such a step is present, when the upper mold laminated body and the lower mold laminated body are combined to form a single molding laminated body, a gap caused by the step is created inside the molding laminated body. The gap inside the molding laminated body causes internal defects such as cracks and voids inside the composite material component. Therefore, the compression member is placed on the surface of at least one laminated body of the upper mold laminated body and the lower mold laminated body, and heating and pressurization are applied. As a result, even if the step is present on the surface of the laminated body, the surface of the laminated body can be flattened along the compression member by the compression of the compression member. This suppresses the occurrence of the gap inside the molding laminated body, thereby suppressing the formation of internal defects such as cracks and voids inside the composite material component.

In a method for molding a composite material component according to a second aspect, the prepreg includes a base lamination material and a partial lamination material that is shorter than the base lamination material, laminating the prepreg onto each of the upper mold and the lower mold includes: laminating one or more of the base lamination material onto at least one mold of the upper mold and the lower mold; laminating one or more of the partial lamination material; and laminating the other base lamination material onto the partial lamination material in the method for molding a composite material component according to the first aspect.

According to the second aspect, when laminating the prepreg onto each of the upper mold and the lower mold, in the molding tool of at least one of the upper mold and the lower mold, the partial lamination material is laminated to be sandwiched between the plurality of base lamination materials. When molding the composite material component that varies in thickness, the partial lamination material can be partially laminated corresponding to a thicker area in the component.

A method for molding a composite material component according to a third aspect further includes: before laminating the partial lamination material onto at least one mold of the upper mold and the lower mold, laminating the partial lamination material onto a mold for the partial lamination material, and applying heating and pressurization in the method for molding a composite material component according to the second aspect.

According to the third aspect, by laminating the partial lamination material onto the mold for the partial lamination material and applying heating and pressurization, the partial lamination material can be shaped. By laminating the partial lamination material that is shaped in advance onto at least one molding tool of the upper mold and the lower mold, it is possible to suppress the occurrence of a large step caused by the partial lamination of the partial lamination material on the surface of the laminated body laminated onto the molding tool. As a result, when compressing the surface of the laminated body with the compression member, it is possible to prevent locally excessive compressive force from acting, thereby suppressing the occurrence of fiber distortion.

A method for molding a composite material component according to a fourth aspect further includes: after applying heating and pressurization in a state where the partial lamination material is laminated onto the mold for the partial lamination material, applying rapid cooling to the partial lamination material in the method for molding a composite material component according to the third aspect.

According to the fourth aspect, by rapidly cooling the partial lamination material after heating and pressurization on the mold for the partial lamination material, it is easier to maintain the shaping state of the partial lamination material.

In a method for molding a composite material component according to a fifth aspect, laminating the prepreg onto each of the upper mold and the lower mold includes: installing a dummy plate with a flat shape or a gently curved shape on a deep portion of a cavity of at least one mold of the upper mold and the lower mold; laminating the prepreg continuously from a shallow portion of the cavity of at least one mold of the upper mold and the lower mold to the dummy plate; removing the dummy plate; and applying heating and pressurization to the laminated prepreg for shaping along at least one mold of the upper mold and the lower mold in the method for molding a composite material component according to the first to fourth aspects.

According to the fifth aspect, when molding the composite material component that varies in thickness, at least one molding tool of the upper mold and the lower mold is a mold including the deep portion and the shallow portion of the cavity. When laminating the prepreg onto the molding tool, an automatic laminating device may be used. When automatically laminating the prepreg onto the molding tool by using the automatic laminating device, the head of the automatic laminating device may interfere with the portions where the depth of the cavity in the molding tool varies, making it difficult to laminate the prepreg. Therefore, the dummy plate is installed in the deep portion of the cavity of the molding tool, and the prepreg is laminated continuously from the shallow portion of the cavity to the dummy plate. Subsequently, the dummy plate is removed, and heating and pressurization are applied to the prepreg laminated onto the molding tool for shaping. As a result, even with the molding tool having the deep portion and the shallow portion of the cavity, it is possible to automatically laminate the prepreg while preventing the head of the automatic laminating device from interfering.

In a method for molding a composite material component according to a sixth aspect, laminating the partial lamination material onto the mold for the partial lamination material and applying heating and pressurization includes: installing a dummy plate with a flat shape or a gently curved shape on a deep portion of a cavity of the mold for the partial lamination material; laminating the partial lamination material continuously from a shallow portion of the cavity of the mold for the partial lamination material to the dummy plate; removing the dummy plate; and applying heating and pressurization to the laminated partial lamination material for shaping along the mold for the partial lamination material in the method for molding a composite material component according to the third or fourth aspect.

According to the sixth aspect, when shaping the partial lamination material on the mold for the partial lamination material, even with the mold having the deep portion and the shallow portion of the cavity, it is possible to automatically laminate the partial lamination material while preventing the head of the automatic laminating device from interfering.

In a method for molding a composite material component according to a seventh aspect, laminating the prepreg onto each of the upper mold and the lower mold includes: preparing a mold having a gradient portion with a gradient toward a contact surface where the upper mold and the lower mold come into contact in the combined state, as at least one mold of the upper mold and the lower mold; and laminating the prepreg such that a number of laminations decreases as approaching the contact surface in the method for molding a composite material component according to the first to sixth aspects.

According to the seventh aspect, at least one molding tool of the upper mold and the lower mold includes a gradient portion with a gradient toward the contact surface. As a result, when using the automatic laminating device to automatically laminate the prepreg onto the molding tool, it is possible to automatically laminate the prepreg while preventing the head of the automatic laminating device or roller for pressing the prepreg from interfering with the contact surface.

A method for molding a composite material component according to an eighth aspect further includes: releasing the combination of the upper mold and the lower mold after applying heating and pressurization to the molding laminated body; and trimming an end of the composite material component located in a predetermined range near the contact surface of the gradient portion in the combined state in the method for molding a composite material component according to the seventh aspect.

According to the eighth aspect, by trimming the end of the composite material component as an excess portion, the quality of the composite material component can be improved.

In a method for molding a composite material component according to a ninth aspect, laminating the prepreg onto each of the upper mold and the lower mold includes: disposing a cutting plate in an area on at least one mold of the upper mold and the lower mold where an excessive portion in the prepreg is at least laminated; laminating the prepreg continuously from at least one mold of the upper mold and the lower mold to the cutting plate; cutting the excessive portion in the prepreg on the cutting plate; removing the cutting plate; and shaping the laminated prepreg along at least one mold of the upper mold and the lower mold in the method for molding a composite material component according to the first to eighth aspects.

According to the ninth aspect, the cutting plate is disposed on at least one molding tool of the upper mold and the lower mold, and the excessive portion of the prepreg is cut on the cutting plate. This makes it possible to cut the excessive portion in the prepreg without damaging the molding tool. Furthermore, by cutting the excessive portion in the prepreg, it is possible to prevent the excessive portion from being present on the contact surface of the molding tool, allowing the upper mold and the lower mold to be properly combined.

The method for molding a composite material component according to a tenth aspect includes: laminating a prepreg onto a molding tool; and applying heating and pressurization to a laminated body of the prepreg to mold the composite material component. Laminating the prepreg onto the molding tool includes: installing a dummy plate with a flat shape or a gently curved shape on a deep portion of a cavity of the molding tool; laminating the prepreg continuously from a shallow portion of the cavity of the molding tool to the dummy plate; removing the dummy plate; and applying heating and pressurization to the laminated prepreg for shaping along the molding tool.

The method for molding a composite material component according to an eleventh aspect includes: laminating a prepreg onto a molding tool; and applying heating and pressurization to a laminated body of the prepreg to mold the composite material component. The prepreg includes a base lamination material and a partial lamination material that is shorter than the base lamination material, laminating the prepreg onto the molding tool includes: laminating one or more of the base lamination material on the molding tool; laminating one or more of the partial lamination material; and laminating the other base lamination material onto the partial lamination material. Before laminating the partial lamination material onto the molding tool, the partial lamination material is laminated onto the mold for the partial lamination material, and heating and pressurization are applied. Laminating the partial lamination material onto the mold for the partial lamination material and applying heating and pressurization includes: installing a dummy plate with a flat shape or a gently curved shape on a deep portion of a cavity of the mold for the partial lamination material; laminating the partial lamination material continuously from a shallow portion of the cavity of the mold for the partial lamination material to the dummy plate; removing the dummy plate; and applying heating and pressurization to the laminated partial lamination material for shaping along the mold for the partial lamination material.

The method for molding a composite material component according to a twelfth aspect includes: laminating a prepreg onto a molding tool; and applying heating and pressurization to a laminated body of the prepreg to mold the composite material component. Laminating the prepreg onto the molding tool includes, as the molding tool: preparing a mold that has a gradient portion with a gradient toward a peripheral end surface of the cavity; and laminating the prepreg such that the number of laminations decreases as approaching the peripheral end surface.

The method for molding a composite material component according to a thirteenth aspect includes: laminating a prepreg onto a molding tool; and applying heating and pressurization to the laminated body of the prepreg to mold the composite material component. Laminating the prepreg onto the molding tool includes, as the molding tool: preparing a mold that has a gradient portion with a gradient toward a peripheral end surface of the cavity; and laminating the prepreg such that the number of laminations decreases as approaching the peripheral end surface. After applying heating and pressurization to the laminated body of the prepreg, an end of the composite material component located in a predetermined range near the peripheral end surface of the gradient portion is trimmed.

The method for molding a composite material component according to a fourteenth aspect includes: laminating a prepreg onto a molding tool; and applying heating and pressurization to a laminated body of the prepreg to mold the composite material component. Laminating the prepreg onto the molding tool includes: disposing a cutting plate in an area of the prepreg where an excessive portion is at least laminated; laminating the prepreg continuously from the molding tool to the cutting plate; cutting the excessive portion of the prepreg on the cutting plate; removing the cutting plate; and shaping the laminated prepreg along the molding tool.

## Claims

1. method for molding a composite material component, the method comprising:
laminating a prepreg onto each of an upper mold and a lower mold;
placing a compression member of a predetermined shape on a surface of at least one laminated body of an upper mold laminated body laminated onto the upper mold and a lower mold laminated body laminated onto the lower mold, and applying heating and pressurization to the laminated body on which the compression member is placed;
removing the compression member from the laminated body on which the compression member is placed;
combining the upper mold and the lower mold to cause the surface of the upper mold laminated body to come into contact with the surface of the lower mold laminated body, and forming a single molding laminated body from the upper mold laminated body and the lower mold laminated body; and
applying heating and pressurization to the molding laminated body to mold the composite material component.

2. The method for molding a composite material component according to claim 1, wherein
the prepreg includes a base lamination material and a partial lamination material that is shorter than the base lamination material,
laminating the prepreg onto each of the upper mold and the lower mold includes:
laminating one or more of the base lamination material onto at least one mold of the upper mold and the lower mold;
laminating one or more of the partial lamination material; and
laminating the other base lamination material onto the partial lamination material.

3. The method for molding a composite material component according to claim 2, further comprising:
before laminating the partial lamination material onto at least one mold of the upper mold and the lower mold, laminating the partial lamination material onto a mold for the partial lamination material, and applying heating and pressurization.

4. The method for molding a composite material component according to claim 3, further comprising:
after applying heating and pressurization in a state where the partial lamination material is laminated onto the mold for the partial lamination material, applying rapid cooling to the partial lamination material.

5. The method for molding a composite material component according to any one of claims 1 to 4, wherein
laminating the prepreg onto each of the upper mold and the lower mold includes:
installing a dummy plate with a flat shape or a gently curved shape on a deep portion of a cavity of at least one mold of the upper mold and the lower mold;
laminating the prepreg continuously from a shallow portion of the cavity of at least one mold of the upper mold and the lower mold to the dummy plate;
removing the dummy plate; and
applying heating and pressurization to the laminated prepreg for shaping along at least one mold of the upper mold and the lower mold.

6. The method for molding a composite material component according to claim 3 or 4, wherein
laminating the partial lamination material onto the mold for the partial lamination material and applying heating and pressurization includes:
installing a dummy plate with a flat shape or a gently curved shape on a deep portion of a cavity of the mold for the partial lamination material;
laminating the partial lamination material continuously from a shallow portion of the cavity of the mold for the partial lamination material to the dummy plate;
removing the dummy plate; and
applying heating and pressurization to the laminated partial lamination material for shaping along the mold for the partial lamination material.

7. The method for molding a composite material component according to any one of claims 1 to 6, wherein
laminating the prepreg onto each of the upper mold and the lower mold includes:
preparing a mold having a gradient portion with a gradient toward a contact surface where the upper mold and the lower mold come into contact in the combined state, as at least one mold of the upper mold and the lower mold; and
laminating the prepreg such that a number of laminations decreases as approaching the contact surface.

8. The method for molding a composite material component according to claim 7, further comprising:
releasing the combination of the upper mold and the lower mold after applying heating and pressurization to the molding laminated body; and
trimming an end of the composite material component located in a predetermined range near the contact surface of the gradient portion in the combined state.

9. The method for molding a composite material component according to any one of claims 1 to 8, wherein
laminating the prepreg onto each of the upper mold and the lower mold includes:
disposing a cutting plate in an area on at least one mold of the upper mold and the lower mold where an excessive portion in the prepreg is at least laminated;
laminating the prepreg continuously from at least one mold of the upper mold and the lower mold to the cutting plate;
cutting the excessive portion in the prepreg on the cutting plate;
removing the cutting plate; and
shaping the laminated prepreg along at least one mold of the upper mold and the lower mold.
